# EUROPÄISCHE PATENTSCHRIFT

(11) **EP 3 067 013 B1**
(45) Veröffentlichungstag und Bekanntmachung des Hinweises auf die Patenterteilung: **18.04.2018**
(21) Anmeldenummer: 16159521.0
(22) Anmeldetag: 09.03.2016
(51) Int. Cl.: A61C 13/00, B23Q 3/06

(54) **HALTEVORRICHTUNG FÜR DENTALROHLINGE**
HOLDING DEVICE FOR DENTAL BLANKS
DISPOSITIF DE SUPPORT POUR EBAUCHES DENTAIRES

(30) Priorität: 09.03.2015 DE 102015204174
(43) Veröffentlichungstag der Anmeldung: 14.09.2016
(73) Patentinhaber: Precis Glashütte GmbH, 01768 Glashütte (DE)
(72) Erfinder: SCHÜTZ, Roland, 01744 Dippoliswalde (DE)
(74) Vertreter: Jostarndt Patentanwalts-AG

(56) Entgegenhaltungen:
- WO-A1-2007/143765
- DE-U1-202010 001 125
- JP-A- 2013 144 137

## Beschreibung

### Gebiet der Erfindung

Die Erfindung bezieht sich auf eine Haltevorrichtung für Dentalrohlinge und eine Rohlingsanordnung umfassend diese Haltevorrichtung und einen oder zwei Dentalrohlinge. Die Erfindung umfasst weiterhin ein Verfahren zur höhengerechten Positionierung eines Dentalrohlings in der erfindungsgemäßen Haltevorrichtung mit Hilfe einer Schablone und ein Verfahren zur Herstellung eines dentalen Sinterformkörpers unter Sinterung des gesamten Dentalrohlings mit den darin enthaltenen herausgefrästen Teilen.

### Hintergrund der Erfindung

Die Zahntechnik wird sich in den nächsten Jahren auch dahingehend verändern, dass in das zwar hoch technisierte, aber dennoch manuell geprägte Handwerk eine zunehmend hochspezialisierte Automatisierung Einzug halten wird. Es sind diverse CAD/CAM-Systeme verfügbar, die den Zahnersatz aus verschiedensten Materialien fräsen. Gerüstwerkstoffe wie Zirconiumdioxid und Legierungen aus Nichtedelmetallen (NEM), die sich durch eine besondere Festigkeit und Geometrie auszeichnen, kommen hier zunehmend zum Einsatz.

Insbesondere werden im dentalen CAD/CAM Fräsmaschinenbereich Rohlinge gemäß elektronisch vorgegebenen Daten bearbeitet, um Zahnersatzteile, aber auch zahntechnische Modelle als Hilfsmittel für den Zahntechniker durch Fräsbearbeitung herzustellen. Derartige Modelle stellen vollständige Kiefer von Patienten oder Teilabschnitte dieser dar und dienen dem Zahntechniker zur Herstellung von Zahnersatzteilen oder als Hilfsmittel bei der Anpassung von Zahnersatzteilen.

Die Fräsbearbeitung von Rohlingen zur Herstellung von Modellen wird beispielsweise in der DE 10 2009 013 153 A1 beschrieben.

Aus der DE 10 2010 016 847 A1 ist es bekannt, Rohlinge zur Herstellung von Dentalmodellen zu bearbeiten, die denjenigen Rohlingen entsprechen, die in Dental-Fräsmaschinen für die Herstellung von Dentalrestaurationsteilen verwendet werden.

Bei der Herstellung eines Modells oder eines Dentalrestaurationsteils durch spanabhebende Bearbeitung müssen insbesondere dann erhebliche Kräfte aufgewendet werden, wenn das verwendete Material hart ist. Dies gilt beispielsweise für Zirconiumdioxid, das daher typischerweise teilgesintert verarbeitet wird, mit den an sich bekannten Nachteilen hinsichtlich der Maßhaltigkeit. Auch bei weniger harten Keramiken wie Lithiumdisilicat, das in neuerer Zeit häufig eingesetzt wird, ist die Maßhaltigkeit und damit die präzise Lagerung des Rohlings und die exakte Mehrachsensteuerung des Fräsers relativ zu diesem unabdingbar.

Gemäß der DE 10 2009 011 443 A1 ist ein im Wesentlichen scheibenförmiger, flachzylindrischer Rohling in einem Standard-Einspannhalter eingespannt, der typischerweise die Aufnahme von Rohlingen in der Standardgröße um 98,5 mm Durchmesser ermöglicht. Die Verwendung derartiger Rohlinge ermöglicht das Fräsen einer Vielzahl von Dentalrestaurationsteilen, wie es beispielsweise aus der WO 2004/086999 A1 ersichtlich ist, bedingt aber andererseits einen erheblichen Materialabtrag, da aus dem Vollen gefräst werden muss.

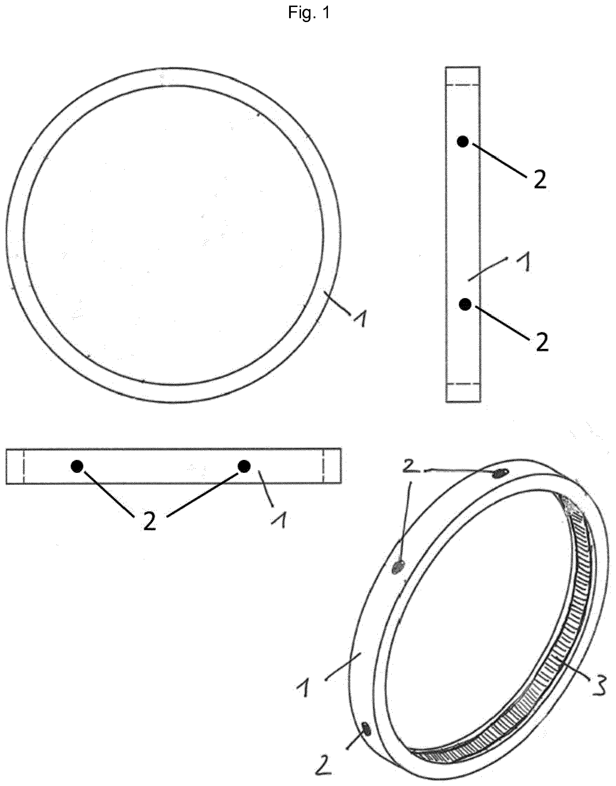

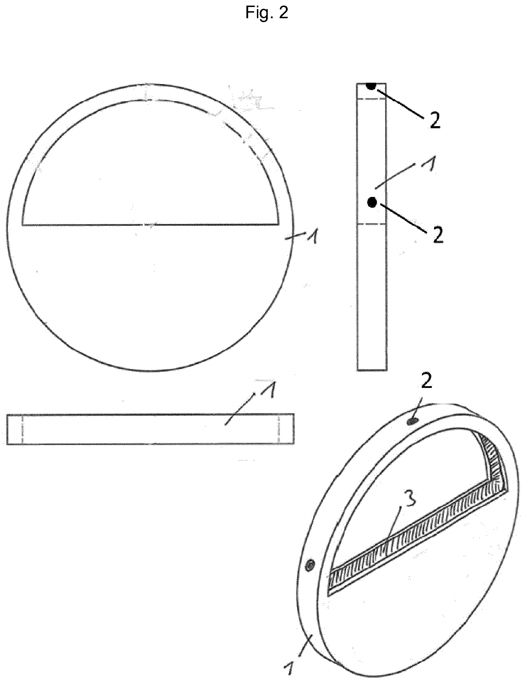

Die DE 20 2010 001 125U1 betrifft eine Haltevorrichtung für Dentalrohlinge und lehrt hierbei zum Einspannen des Rohlings die Verwendung von übergreifenden Pratzen (s. Anspruch 3, Fig. 1 und 2). Da diese Spannpratzen nur lokal an dem Rohling angreifen, besteht die Gefahr einer Beschädigung des Rohlings.

Zur Halterung von Rohlingen für die Herstellung von Zahnersatzteilen in einer Fräs- oder sonstigen Bearbeitungsmaschine ist aus WO 95/30382 eine Vorrichtung mit den ringförmigen Tragkörper bekannt. Der Zahnersatzteil-Rohling ist dort aus Kostengründen so bemessen, dass bei der Bearbeitung möglichst wenig Abfall an teurem Rohlingsmaterial entsteht. Der hierin offenbarte zylindrische Rohling ist in einen ringförmigen Tragkörper eingeklebt, der sich in die jeweilige Bearbeitungsmaschine einspannen lässt und den Rohling in einem Teilbereich seiner axialen Länge umgibt. Die hier vorgenommene Klebeverbindung ist umständlich herzustellen, zudem kommt es leicht zu Kleberückständen auf dem Rohling oder dem Tragkörper und bei einer nachträglich festgestellten Fehlpositionierung des Rohlings kann dessen Anordnung nicht mehr korrigiert werden.

Es ist eine Aufgabe der vorliegenden Erfindung, eine dahingehend verbesserte Haltevorrichtung zur Verfügung zu stellen.

### Zusammenfassung der Erfindung

In einem ersten Aspekt wird diese Aufgabe gemäß der Erfindung dadurch gelöst, dass eine Haltevorrichtung für einen Dentalrohling zum Einspannen der Haltevorrichtung in einer Werkzeugmaschine zur materialabtragenden Bearbeitung des Rohlings bereitgestellt wird, wobei die Haltevorrichtung mindestens eine Aussparung zur Aufnahme des mindestens einen Rohlings aufweist, und die dadurch gekennzeichnet ist, dass die mindestens eine Aussparung in ihrer Wand -eine längsseitige Nut umfasst, in der ein Fixierelement vorgesehen ist, das mittels Stellelementen zum Zentrum der Aussparung hin bewegbar ist und ein reversible Befestigung des Rohlings erlaubt.

Die erfindungsgemäße Haltevorrichtung vereinigt mehrere Vorteile gegenüber den aus dem Stand der Technik bekannten Haltevorrichtungen.

Wie die Erfinder herausgefunden haben, erlaubt eine solche Ausgestaltung mit einem nutengelagerten Fixierelement und Stellelementen eine einfache und stabile Befestigung des Rohlings in der Haltevorrichtung.

Die Rohlinge können hier nach Einbringen in die Haltevorrichtung durch einfaches Betätigen der Stellelemente in der Haltevorrichtung fixiert werden und diese Verbindung kann ebenso einfach wieder gelöst werden.

Dadurch kann bei einer Fehlpositionierung der Rohling wieder gelöst und nach korrekter Adjustierung wieder befestigt werden. Zudem ist die die Haltevorrichtung beliebig wiederverwendbar und stellt keinen Einwegartikel dar.

Die erfindungsgemäße Haltevorrichtung erlaubt es erstmalig, den gesamten Rohling nach Herausfräsen der dentalen Formköper aus der Vorrichtung zu entnehmen und zu sintern, so dass darin enthaltenen Formkörper durch den Rohling während des Sintervorgangs stabilisiert werden und danach als endgesinterte Formkörper ohne Gefahr einer Beschädigung aus dem Rohling herausgetrennt werden können. Die erfindungsgemäße Haltevorrichtung leistet damit einen entscheidenden Durchbruch in der Herstellung von gesinterten Formkörpern. Dieses Herstellungsverfahren für gesinterte Formkörper wird als weiterer Aspekt von der Erfindung der Erfindung bereitgestellt und entsprechend beansprucht.

Durch das bevorzugterweise ringförmige Fixierelement wird der durch die Stellelemente ausgeübte Druck auf den gesamten Rohlingsumfang verteilt, so dass gerade auch fragile Rohlinge (z.B. aus poröser Keramik) ohne Gefahr der Beschädigung befestigt werden können.

Da durch die Haltevorrichtung auf eine ringförmige, zum Einspannen in die Fräsmaschine vorgesehene Erweiterung des Rohlings verzichtet werden kann, spart man an Material, was gerade bei den oft sehr kostspieligen Werkstoffen im Dentalbereich eine signifikante Kostenreduktion bedeutet.

Die erfindungsgemäße Haltevorrichtung besteht aus wenigen Komponenten und ist relativ einfach herzustellen, was sich in geringen Erstellungskosten niederschlägt.

### Die Erfindung im Einzelnen

Bei der erfindungsgemäßen Haltevorrichtung ist die mindestens eine Aussparung von ihrer Form her beliebig wählbar und dabei an die Außenform der zu haltenden Dentalrohlinge angepasst.

In einer Ausführungsform der Erfindung ist bei der Haltevorrichtung die mindestens eine Aussparung ausgewählt aus der Gruppe enthaltend:
(a) eine kreisförmige Aussparung;
(b) eine halbkreisförmige Aussparung;
(c) zwei halbkreisförmige durch einen Steg getrennte Aussparungen;
(d) eine rechteckige Aussparung;
(e) zwei rechteckige Aussparungen;
(f) drei, vier oder mehr rechteckige Aussparungen.

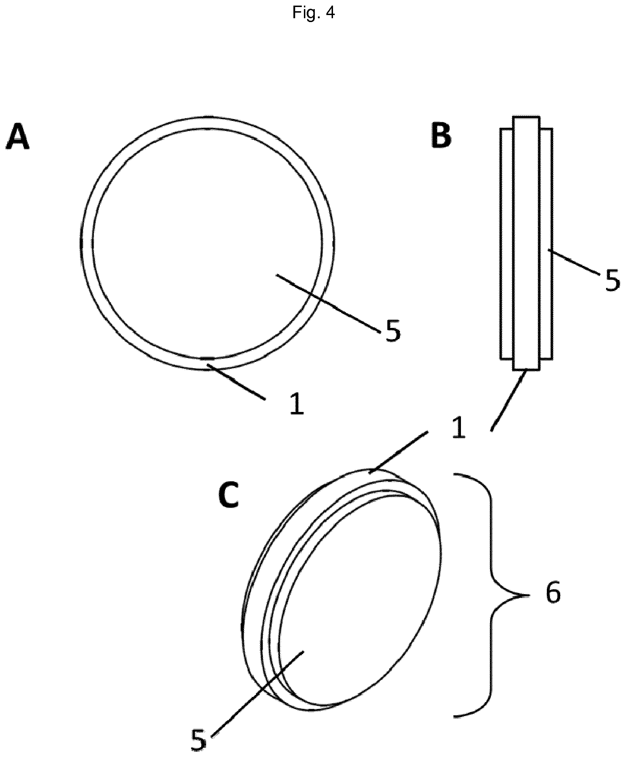

Bei einer kreisförmigen Aussparung ist die Haltevorrichtung selber zweckmäßigerweise als Ring ausgestaltet (s. Figur 1 und Figur 4).

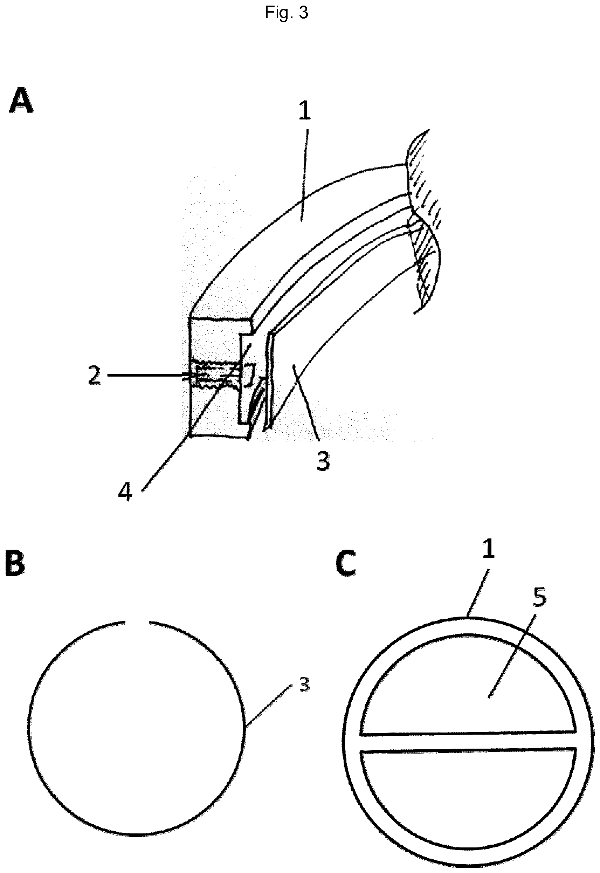

Bei einer halkreisförmigen Aussparung weist die bevorzugt zylinderförmige Haltevorrichtung in einer Ausführungsform nur diese Aussparung auf, ist also in diesem Bereich als Halbring ausgestaltet. In einer alternativen Ausführungsform weist die ringförmige Haltevorrichtung zwei halbkreisförmige Aussparungen auf, die durch einen Steg voneinander getrennt sind (s. Figur 3 C).

Die Aussparung kann auch eine oder mehrere rechteckige, also beispielsweise zwei, drei vier, fünf, sechs, sieben oder acht rechteckige Aussparungen aufweisen, die jeweils einen rechteckigen Rohling aufnehmen. In einer weiteren Ausführungsform können diese rechteckigen Aussparungen abgerundete Ecken aufweisen.

Bei rechteckigen Aussparungen ist das Fixierelement vorzugsweise als Klemmbacke oder Klemmrahmen ausgestalten. Eine Klemmbacke liegt hierbei in der Nut einer Seite der rechteckigen Aussparung, so dass mehrere Klemmbacken, bevorzugt zwei oder vier Klemmbacken verwendet werden, um den rechteckigen Rohling zu fixieren.

In einer bevorzugten Ausführungsform ist die erfindungsgemäße Haltevorrichtung einstückig ausgebildet. Sie stellt damit eine einfach aufgebaute Haltevorrichtung dar, die dadurch auch einen großen Druck auf den darin festgehaltenen Rohling auszuüben vermag.

Ein Klemmrahmen ist ein bevorzugt offener dreiseitiger oder vierseitiger flacher Rahmen, der in der der Nut der Aussparung vorliegt.

Die Haltevorrichtung ist mit ihrer äußeren Form zweckmäßigerweise so gestaltet, dass sie in die dem Fachmann bekannten Dental-Fräsmaschinen auch ohne zusätzliche Adaptoren o.ä. eingesetzt werden kann.

In einer Ausführungsform der Erfindung ist das Fixierelement eine Klemmbacke, ein Klemmrahmen, ein Spannring oder ein Klemmring. Das Fixierelement, das bevorzugter Weise ein Spannring oder ein Klemmring ist, liegt in der längsseitigen Nut, die in der Innenwand der Aussparung vorgesehen ist. Zweckmäßigerweise ist das Fixierelement so ausgestaltet, dass es bei nichtfixiertem Zustand in der Nut verborgen ist, also nicht in die Aussparung hineinragt. Dadurch kann ein Rohling formschlüssig in die Aussparung eingebracht werden, wird also bereits durch die Form der Aussparung in die gewünschte Position gebracht und durch die Fixierelemente in dieser aussparungsseitig vorgegebenen Position fixiert.

Das Fixierelement besteht zweckmäßigerweise aus einem festen Material, das aber eine ausreichende Zähigkeit besitzen muss, um durch die Stellelemente in reversibler Weise verformt zu werden. Als Materialien für das Fixierelement seien hier beispielhaft genannt: Metall, insbesondere Aluminium oder Edelstahl, Kunststoff, insbesondere Polyacrylat, Polyethylen oder Polypropylen.

Das Fixierelement kann auch aus zwei unterschiedlichen Einzelelementen aufgebaut sein, die dann bevorzugt aus unterschiedlichen Materialien bestehen. So kann ein Metallaußenring die Kräfte der lokal einwirkenden Stellelemente aufnehmen ohne durch diese Stellelemente beschädigt zu werden. Ein Kunststoff- oder Gummiinnenring leitet den Druck dann auf den Rohling weiter und aufgrund seines flexibleren Materials ist die Gefahr eine Rohlingsbeschädigung minimiert. Daher sind materialschonend auch hohe Andruckkräfte beim Einspannen unkritisch.

Die Stellelemente sind bevorzugt ausgewählt aus der Gruppe enthaltend Schraube, Gewindestifte, Exzenter und Exzenterhebel. In einer besonders bevorzugten Ausführungsform werden als Stellelemente Gewindestifte, die auch als Madenschrauben bekannt sind, verwendet. Diese besitzen bevorzugt einen Innensechskant und können damit leicht mit einem Sechskantschlüssel in die Haltevorrichtung eingeschraubt werden. Die Stellelemente sind zweckmäßigerweise aus einem harten Kunststoff oder aus Metall.

Die Verwendung eines Exzenters oder Exzenterhebels hat den Vorteil, dass hier ein durch die Geometrie der Exzentervorrichtung definierter Druck auf das Feststellelement und damit auf den Rohling ausgeübt wird.

Die Stellelemente können zweckmäßigerweise in entsprechenden Gewindebohrungen der Haltevorrichtung enthalten sein und von außen auf das in der Nut befindliche Fixierelement drücken.

In einer anderen Ausführungsform setzen das Stellelement tangential am ringförmigen Fixierelement an. So kann beispielsweise das als Gewindebolzen oder Schraube ausgeformte Stellelement einen Spannring, der an den Enden mit Gewinden versehen in einfacher Weise zusammenziehen.

Um das Fixierelement allseitig mit Druck zu beaufschlagen ist es notwendig, dass mindestens zwei, bevorzugt 3 4, 5, oder 6 Stellelemente vorhanden sind. Diese Stellelemente sind zweckmäßigerweise gleichmäßig in der ringförmigen Haltevorrichtung verteilt, so dass sie bei drei Elementen einen Abstand von 120° und bei vier Stellelementen einen Abstand von 90° aufweisen.

Zweckmäßigerweise sind bei der Haltevorrichtung die Stellelemente in der fixierten Position des Dentalrohlings versenkt oder bündig mit der Außenwand der Haltevorrichtung. Dadurch kann die Außenvorrichtung in die Dentalfräsmaschinen eingespannt werden, ohne dass eventuell hervorstehende Stellelemente die maschinenseitige Befestigung stören oder behindern.

In einer Ausführungsform der Erfindung weist die Haltevorrichtung eine Höhe von 5 bis 15 mm, bevorzugt von 8 bis 12 mm und besonders bevorzugt von 10 mm auf. Sie liegt damit bevorzugterweise unter der Höhe der standardmäßig verwendeten Rohlinge und bildet damit einen bevorzugterweise mittig gelegenen Rahmen, der von dem Rohling beidseitig überragt wird, wodurch die Haltevorrichtung nicht beim Fräsen beschädigt wird.

Erfindungsgemäß ist es besonders günstig, wenn die Haltevorrichtung eine Dicke von 2,5 bis 7,5 mm, bevorzugt von 4 bis 6 mm und besonders bevorzugt von 5 mm aufweist.

Die Haltevorrichtung kann aus unterschiedlichsten Materialien hergestellt werden, insofern sie die ausreichende Festigkeit besitzen. Geeignete Materialien umfassen, Metall, insbesondere hierbei Aluminium oder Edelstahl, Kunststoff, insbesondere hierbei Polyester, Polyacrylate, Polyimide und Phenoplaste und glasfaserverstärkter Kunststoff.

Zweckmäßigerweise ist die Nut der erfindungsgemäßen Haltevorrichtung als Rundnut oder als winklige Nut ausgestaltet, wobei diese bevorzugt eine rechteckige oder quadratische Nut ist. Diese Nutformen sind einfach zu fräsen und erlauben die Aufnahme von Fixierelementen mit (halb)rundem oder eckigem Querschnitt, wie sie durch die erfindungsgemäß bevorzugten, Klemmbacken, Klemmrahmen, Spann- oder Klemmringe in einfacher Weise realisiert werden können.

In einer bevorzugten Ausführungsform der Erfindung besitzt bei der Haltevorrichtung die winklige Nut eine Breite von zwischen 4 und 8 mm und bevorzugt von 6 mm.

Die Haltevorrichtung kann auch eine Codierung tragen, über den eine Identifizierung des individuellen Bearbeitungsprogramms erfolgt, das an dem betreffenden Rohling abgearbeitet werden soll. Eine solche Codierung ist in bevorzugter Weise ein maschinenlesbarer Code wie beispielsweise ein Strichcode oder ein QR-Code.

Vorzugsweise ist die Haltevorrichtung zur Aufnahme eines zylinderförmigen Rohlings (Ronde) ausgestaltet oder alternativ zur Aufnahme von einem oder zwei halbzylinderförmigen Rohlingen (Semi-Ronden) ausgestaltet. Weiterhin kann auch mindestens eine Ronden mit einem eckigen Querschnitt, bevorzugt ein orthogonaler Polyeder wie ein Würfel oder ein Quader durch die Haltevorrichtung aufgenommen werden. Bevorzugt sind hierbei Polyeder mit abgerundeten Ecken. Die jeweilige Form der Ronden diktiert die Form der mindestens einen Aussparung.

In bevorzugter Weise ist die Haltevorrichtung zur Aufnahme eines zylinderförmigen Rohlings mit einem Durchmesser von 88 mm ausgestaltet. Die entspricht dem Durchmesser der Standardrohlinge im Dentalbereich.

Der mit der Haltevorrichtung eingespannte Rohling kann aus beliebigem Material bestehen. Bevorzugt ist hierbei ein Material, das ausgewählt ist aus der Gruppe enthaltend Wachs, Kunststoff, Keramik, Gips, Metall, Metalllegierungen und Nichtedelmetall-Legierungen (NEM).

In einer bevorzugten Ausführungsform der Erfindung besteht der Dentalrohling aus einer Kobalt-Chrom-Legierung. Derartige Legierungen zeigen herausragende Eigenschaften für Zahnteile und können problemlos in dem erfindungsgemäßen Verfahren eingesetzt werden.

In einer speziellen Ausführungsform wird als Material für den Rohling das Metall Titan verwendet.

Zweckmäßigerweise werden hierbei Dentallegierungen verwendet, die den Anforderungen der Norm DIN EN ISO 22674:2007 entsprechen. Solche normgemäßen Legierungen sind frei von Beryllium, Gallium und Cadmium.

In einer bevorzugten Ausführungsform der Erfindung ergibt die Haltevorrichtung zusammen dem zylinderförmigen Rohling eine Standard-Einspannhalterung.

Die einzelnen Bestandteile der Haltevorrichtung, also der ringförmige Rahmen, das Fixierelement und die Stellelement bestehen bevorzugt aus einem korrosionsbeständigen Material, so dass sie auch bei dem häufig zur Anwendung kommenden Naßfräsen von Rohlingen nicht korrodieren.

In einem weiteren Aspekt stellt die Erfindung eine Rohlingsanordnung bereit, die eine erfindungsgemäße Haltevorrichtung sowie mindestens einen Dentalrohling aufweist, wobei der mindestens eine Rohling in der Haltevorrichtung durch die Stellelemente und das Fixierelement festgespannt ist. Bevorzugterweise weist die Rohlingsanordnung hierbei einen scheibenförmigen, flachzylindrischen Dentalrohling oder zwei scheibenförmige halbzylinderförmige, flache halbzylindrische Dentalrohlinge auf.

Bevorzugterweise umfasst bei der Rohlingsanordnung die Haltevorrichtung als mittig positionierter Ring den zylinderförmigen Dentalrohling.

In einem weiteren Aspekt stellt die Erfindung ein Verfahren zur höhengerechten Positionierung des mindestens einen Rohlings in der erfindungsgemäßen Haltevorrichtung bereit, wobei das Verfahren die folgenden Schritte umfasst:
(a) Bereitstellen einer Schablone mit mindestens einer Aussparung die der Form des mindestens einen Rohlings entspricht und einer Tiefe, die der nach unten aus der Haltevorrichtung herausragenden Rohlingshöhe entspricht;
(b) Inkontaktbringen einer Haltevorrichtung mit dem mindestens einen darin eingeführten Rohling mit der Schablone, so dass sowohl die Haltevorrichtung auf der Schablone, als auch der mindestens eine Rohling auf dem Boden der schablonenseitigen Aussparung aufliegt;
(c) Fixieren des mindestens einen Rohlings durch Betätigung der Stellelemente;
(d) Entnahme der Haltevorrichtung mit dem mindestens einen fixierten Rohling aus der Schablone.

In einem weiteren Aspekt stellt die Erfindung ein Verfahren zur Herstellung eines dentalen Sinterformkörpers bereit, wobei das Verfahren die folgenden Schritte umfasst:
(a) Bereitstellen einer erfindungsgemäßen Rohlingsanordnung;
(b) Einspannen der Rohlingsanordnung in eine Dentalfräsmaschine;
(c) Spanabhebendes Herausarbeiten der dentalen Formkörper;
(d) Entfernen der Haltevorrichtung von dem gemäß Schritt (c) bearbeiteten Rohling;
(e) Sintern des Rohlings aus Schritt inklusive der darin enthaltenen herausgefrästen dentalen Formkörper in einem Sinterofen;
(f) Heraustrennen der endgesinterten dentalen Formkörper aus dem gesinterten Rohling.

Durch die erfindungsgemäße Rohlingsanordnung, die eine reversible Verbindung zwischen Rohling und Haltevorrichtung beinhaltet, kann nach Entfernen der Haltevorrichtung der gesamte Rohling inklusive der darin enthaltenen herausgefrästen dentalen Formkörper in einem Sinterofen endgesintert werden.

Dieses Verfahren weist mehrere Vorteile gegenüber den aus dem Stand der Technik bekannten Verfahren auf.

Bei diesem Verfahren müssen die herausgefrästen Formkörper für das Sintern nicht aus dem Rohling herausgebrochen werden. Diese Tätigkeit, die manuell erfolgen muss, ist zeitaufwändig und beinhaltet die Gefahr, dass die Formkörper dabei beschädigt werden.

Nach dem Fräsen wird der Formkörper noch durch Verbindungsstege in dem Rohling gehalten. Diese Verbindungsstege sorgen dafür, dass der Formkörper während des Sintervorgangs stabilisiert wird, so dass er sich nicht verziehen kann. Dies ist gerade bei großen Teilen, beispielsweise bei gekrümmten Brücken von Vorteil, denn für diese Formkörper ist die Gefahr relativ groß, dass sie sich als herausgetrennte Formköper während des Sintervorgangs verziehen.

Das erfindungsgemäße Verfahren wurde durch neue, innovative Sinterofensysteme möglich gemacht, die besondere Sintereinsätze aufweisen, die einerseits so groß sind, dass sie komplette Dentalrohlinge mit den üblichen Maßen von bis zu 100 mm aufnehmen können und andererseits durch innovative Begasungstechnologien auch bei großen Werkstücken eine durchgehend hochwertige Sinterqualität gewährleisten.

Solche Sinteröfen werden beispielsweise von der Firma Thermostar GmbH, Aachen hergestellt. Ein Beispiel hierfür ist der Schutzgas-Sinterofen "Denta-Star K2" der Firma Thermostar.

### Definitionen

Gemäß der Erfindung sind unter den Begriffen "halbzylinderförmig" und "halbkreisförmig" nicht nur die Kreissektoren mit einem Innenwinkel von 180° zu verstehen, sondern auch davon verschiedene Kreissektoren mit einem Winkel α zwischen 165° und 195°. Solche Kreissektoren können dann als klassische Kreissektoren mit spitzen Basis (bei α < 180°) oder stumpfer Basis (bei α > 180°) vorliegen. Die Kreissektoren können aber auch durch eine gerade Linie (mit evtl. abgerundeten Ecken) oder eine kurvige Linie begrenzt sein.

### Kurze Beschreibung der Abbildungen

Diese und andere Aspekte der Erfindung werden im Detail in den Abbildungen wie folgt gezeigt.
Fig. 1 zeigt eine schematische Skizze einer Haltevorrichtung gemäß einer ersten Ausführungsform für einen zylinderförmigen Rohling (Ronde). Dargestellt ist die Haltevorrichtung in Aufsicht (links oben), in den beiden senkrecht zueinander stehenden Seitenansichten (lins unten und rechts oben) und in perspektivischer Darstellung (rechts unten) mit dem in der Nut eingefügten Fixierelement (3) und den als Madenschraube ausgestalteten Stellelementen (2).
Fig. 2 zeigt eine schematische Skizze einer Haltevorrichtung gemäß einer zweiten Ausführungsform für einen halbzylinderförmigen Rohling (Semi-Ronde) und entsprechend halbkreisförmiger Aussparung. Dargestellt ist die Haltevorrichtung in Aufsicht (links oben), in den beiden senkrecht zueinander stehenden Seitenansichten (lins unten und rechts oben) und in perspektivischer Darstellung (rechts unten) mit dem in der Nut eingefügten Fixierelement (3) und den als Madenschraube ausgestalteten Stellelementen (2).
Fig. 3A zeigt einen Querschnitt durch eine Haltevorrichtung (1) gemäß der ersten Ausführungsform mit der rechteckig ausgestalteten Ringnut (4), einem Spannring als Fixierelement (3) und einem Gewindebolzen als Stellelement (2). In Figur 3B ist ein offener Spannring in Aufsicht schematisch dargestellt. In Figur 3C ist eine Haltevorrichtung (1) mit zwei halbreisförmigen Aussparungen zum Einspannen von zwei Halbzylinder-Rohlingen (5) schematisch in Aufsicht dargestellt.
Fig. 4 zeigt eine erfindungsgemäße Rohlingsanordnung (6) mit einer ringförmigen Haltevorrichtung, die mittig einen zylinderförmigen Dentalrohling (5) umspannt. Die schematische Darstellung zeigt die Rohlingsanordnung in Aufsicht (A), Seitenansicht (B) und in perspektivischer Darstellung (C).

### Detaillierte Beschreibung der Ausführungsbeispiele

Fig. 1 zeigt eine schematische Skizze einer erfindungsgemäßen Haltevorrichtung mit einer runden Aussparung zur Aufnahme eines zylinderförmigen Rohlings (Ronde). In dieser Ausführungsform wird zweckmäßigerweise ein Spannring als Fixierelement verwendet. Dieser offene Spannring (s. Fig. 3B) kann durch leichtes Zusammendrücken in die längsseitige Nut eingefügt werden und sitzt dort durch Eigenspannung fest. Durch Anziehen der von außen zugänglichen Gewindeschrauben wird der Spannring auf den Rohling gedrückt und fixiert diesem somit unverrückbar in der Haltevorrichtung.

In der Fig. 2 wird eine Haltevorrichtung dargestellt, die in ihrer oberen Hälfte eine halbkreisförmige Aussparung zur Aufnahme eines halbzylinderförmigen Rohlings aufweist. In der gezeigten Ausführungsform liegt in der Nut eine Klemmhalbring und eine an der flachen Aussparungsseite positionierte Klemmbacke an. Auch hier wird durch die Gewindeschrauben und entsprechende Bewegung der Fixierelemente nach innen der Rohling in der Vorrichtung festgehalten.

Alternativ kann auf die Klemmbacke verzichtet werden und in der Nut ein flexibles flaches Element ohne Druckbeaufschlagung durch Stellelemente eingefügt werden, so dass der Rohling durch den Klemmhalbring gegen dieses flexible Element gedrückt und damit befestigt wird.

Der in der Fig. 3A gezeigte Querschnitt verdeutlicht die Lage des Fixierelements und der Stellelemente. Durch die nutseitige Lage wird das Fixierelement innerhalb der Haltevorrichtung stabil gelagert, kann also nicht aus der Haltevorrichtung herausfallen. In Figur 3B wird ein Klemmring in Aufsicht mit entsprechender Ringöffnung gezeigt. Die in Figur 3C gezeigte erfindungsgemäße Haltevorrichtung weist den zusätzlichen Vorteil auf, dass hier zwei halbkreisförmige Rohlinge innerhalb einer Haltevorrichtung fixierbar sind. Solche Halbzylinderformen erlauben die Herstellung von zwei komplexen Kronen in einer Haltevorrichtung.

Fig. 4 zeigt die erfindungsgemäße Rohlingsanordnung in Verbindung mit einem zylinderförmigen Dentalrohling (5). Die Haltevorrichtung ist hierbei so dimensioniert, dass sie zusammen mit dem Rohling eine Standard-Einspannvorrichtung für eine Fräsmaschine ergibt.

Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Liste der Bezugszeichen

- 1: Haltevorrichtung
- 2: Stellelement
- 3: Fixierelement, bevorzugt ein offener Klemmring
- 4: Ringnut
- 5: Dentalrohling
- 6: Rohlingsanordnung mit ringförmiger Haltevorrichtung und zylindrischem Dentalrohling

## Patentansprüche

1. Haltevorrichtung (1) für mindestens einen Dentalrohling (5) zum Einspannen der Haltevorrichtung (1) in einer Werkzeugmaschine zur materialabtragenden Bearbeitung des Rohlings (5), wobei die Haltevorrichtung (1) mindestens eine Aussparung zur Aufnahme des mindestens einen Rohlings (5) aufweist, **dadurch gekennzeichnet, dass** die Aussparung in ihrer Wand eine längsseitige Nut (4) umfasst, in der ein Fixierelement (3) vorgesehen ist, das mittels Stellelementen (2) zum Zentrum der Aussparung hin bewegbar ist und eine reversible Befestigung des Rohlings (5) erlaubt.

2. Haltevorrichtung (1) gemäß Anspruch 1, wobei die mindestens eine Aussparung ausgewählt ist aus der Gruppe enthaltend:
(a) eine kreisförmige Aussparung
(b) eine halbkreisförmige Aussparung
(c) zwei halbkreisförmige durch einen Steg getrennte Aussparungen
(d) eine rechteckige Aussparung
(e) zwei rechteckige Aussparungen
(f) drei, vier oder mehr rechteckige Aussparungen.

3. Haltevorrichtung (1) gemäß Anspruch 1 oder 2, wobei die Haltevorrichtung (1) zylinderförmig oder ringförmig ist.

4. Haltevorrichtung (1) gemäß einem der Ansprüche 1 bis 3, wobei das Fixierelement (3) eine Klemmbacke, ein Klemmrahmen, ein Spannring oder ein Klemmring ist.

5. Haltevorrichtung (1) gemäß einem der vorangehenden Ansprüche, wobei die Stellelemente (2) ausgewählt sind aus der Gruppe enthaltend Schraube, Gewindestifte, Exzenter und Exzenterhebel.

6. Haltevorrichtung (1) gemäß einem der vorangehenden Ansprüche, wobei das Fixierelement (3) in der nichtfixierten Position des Dentalrohlings (5) in der längsseitigen Nut (4) der Aussparung versenkt oder bündig mit der Wand der Aussparung ist.

7. Haltevorrichtung (1) gemäß einem der vorangehenden Ansprüche, wobei die Haltevorrichtung (1) eine Höhe von 5 bis 15 mm, bevorzugt von 8 bis 12 mm und besonders bevorzugt von 10 mm aufweist.

8. Haltevorrichtung (1) gemäß einem der vorangehenden Ansprüche, wobei die Haltevorrichtung (1) eine Dicke von 2,5 bis 7,5 mm, bevorzugt von 4 bis 6 mm und besonders bevorzugt von 5 mm aufweist.

9. Haltevorrichtung (1) gemäß einem der vorangehenden Ansprüche, wobei die Nut (4) eine Rundnut oder eine winklige, bevorzugt rechteckige oder quadratische Nut ist.

10. Haltevorrichtung (1) gemäß Anspruch 9, wobei die winklige Nut (4) eine Breite von zwischen 4 und 8 mm und bevorzugt von 6 mm aufweist.

11. Haltevorrichtung (1) gemäß einem der vorangehenden Ansprüche, wobei sie eine kreisförmige Aussparung mit einem Durchmesser von 85 mm bis 95 mm besitzt.

12. Rohlingsanordnung umfassend eine Haltevorrichtung (1) gemäß einem der Ansprüche 1 bis 11 sowie in der Haltevorrichtung (1) durch die Stellelemente (2) und das Fixierelement (3) festgespannten einen zylinderförmigen oder zwei halbzylinderförmige Dentalrohling(e) (5).

13. Rohlingsanordnung gemäß Anspruch 12, wobei die Haltevorrichtung (1) als mittig positionierter Ring den zylinderförmigen Dentalrohling (5) umfasst.

14. Verfahren zur höhengerechten Positionierung eines Rohlings (5) oder zweier Rohlinge in eine Haltevorrichtung gemäß der Ansprüche 1 bis 11, umfassend die folgenden Schritte:
(a) Bereitstellen einer Schablone mit mindestens einer Aussparung die der Form des mindestens einen Rohlings (5) entspricht und einer Tiefe, die der nach unten aus der Haltevorrichtung (1) herausragenden Rohlingshöhe entspricht;
(b) Inkontaktbringen einer Haltevorrichtung (1), enthaltend den mindestens einen in die Haltevorrichtung (1) eingeführten Rohling (5), mit der Schablone, so dass sowohl die Haltevorrichtung (1) auf der Schablone, als auch der mindestens eine Rohling (5) auf dem Boden der schablonenseitigen Aussparung aufliegt;
(c) Fixieren des mindestens einen Rohlings (5) durch Betätigung der Stellelemente (2);
(d) Entnahme der Haltevorrichtung (1) mit dem mindestens einen fixierten Rohling (5) aus der Schablone.

15. Verfahren zur Herstellung eines dentalen Sinterformkörpers umfassend die folgenden Schritte:
(a) Bereitstellen einer Rohlingsanordnung gemäß einem der Ansprüche 12 oder 13;
(b) Einspannen der Rohlingsanordnung in eine Dentalfräsmaschine;
(c) Spanabhebendes Herausarbeiten der dentalen Formkörper;
(d) Entfernen der Haltevorrichtung (1) von dem gemäß Schritt (c) bearbeiteten Rohling (5);
(e) Sintern des Rohlings (5) aus Schritt inklusive der darin enthaltenen herausgefrästen dentalen Formkörper in einem Sinterofen;
(f) Heraustrennen der endgesinterten dentalen Formkörper aus dem gesinterten Rohling (5).

## Claims

1. A holding device (1) for at least one dental blank (5) for clamping the holding device (1) in a power tool in order to machine the blank (5) by means of material removal, whereby the holding device (1) has at least one recess to accommodate the at least one blank (5), **characterized in that** the wall of the recess has a lengthwise groove (4) in which a fixation element (3) is provided that can be moved towards the center of the recess by means of adjustment elements (2) and that permits a reversible attachment of the blank (5).

2. The holding device (1) according to claim 1, whereby the at least one recess is selected from the group encompassing:
(a) a circular recess;
(b) a semi-circular recess;
(c) two semi-circular recesses separated by a web;
(d) a rectangular recess;
(e) two rectangular recesses;
(f) three, four or more rectangular recesses.

3. The holding device (1) according to claim 1 or 2, whereby the holding device (1) is cylindrical or ring-shaped.

4. The holding device (1) according to one of claims 1 to 3, whereby the fixation element (3) is a clamping jaw, a clamping frame, a locking ring or a clamping ring.

5. The holding device (1) according to one of the preceding claims, whereby the adjustment elements (2) are selected from the group comprising screws, setscrews, eccentrics and eccentric levers.

6. The holding device (1) according to one of the preceding claims, whereby, when the dental blank (5) is not in the affixed state, the fixation element (3) is sunk in the lengthwise groove (4) of the recess or flush with the wall of the recess.

7. The holding device (1) according to one of the preceding claims, whereby the holding device (1) has a height of 5 mm to 15 mm, preferably 8 mm to 12 mm, and especially preferably 10 mm.

8. The holding device (1) according to one of the preceding claims, whereby the holding device (1) has a thickness of 2.5 mm to 7.5 mm, preferably 4 mm to 6 mm, and especially preferably 5 mm.

9. The holding device (1) according to one of the preceding claims, whereby the groove (4) is a round groove or an angled groove, preferably a rectangular or square groove.

10. The holding device (1) according to claim 9, whereby the angled groove (4) has a width of between 4 mm and 8 mm, preferably 6 mm.

11. The holding device (1) according to one of the preceding claims, whereby it has a circular recess with a diameter of 85 mm to 95 mm.

12. A blank arrangement comprising a holding device (1) according to one of claims 1 to 11 as well as comprising one cylindrical or two semi-cylindrical dental blank(s) (5) clamped in the holding device (1) by the adjustment elements (2) and by the fixation element (3).

13. A blank arrangement according to claim 12, whereby the holding device (1), positioned as a centered ring, surrounds the cylindrical dental blank (5).

14. A method for the height-appropriate positioning of one blank (5) or two blanks in a holding device according to claims 1 to 11, comprising the following steps:
(a) a template is provided having at least one recess that matches the shape of the at least one blank (5) and having a depth that corresponds to the blank height extending downwards from the holding device (1);
(b) a holding device (1), containing the at least one blank (5) that is inserted into the holding device (1) is brought into contact with the template, so that the holding device (1) rests on the template and the at least one blank (5) rests on the bottom of the recess on the template side;
(c) the at least one blank (5) is affixed by actuating the adjustment elements (2);
(d) the holding device (1) with the at least one affixed blank (5) is removed from the template.

15. A method for the production of a dental sintered molded part, comprising the following steps:
(a) a blank arrangement according to one of claims 12 or 13 is provided;
(b) the blank arrangement is clamped into a dental milling machine;
(c) the dental molded part is machined by means of material removal;
(d) the holding device (1) is removed from the blank (5) machined in accordance with step (c);
(e) in a sintering furnace, the blank of step (d) is sintered, including the machined dental molded part contained therein;
(f) the finished sintered dental molded part is separated from the sintered blank (5).

## Revendications

1. Dispositif de support (1) pour au moins une ébauche dentaire (5) pour serrer le dispositif de support (1) dans une machine-outil pour le traitement de l'ébauche (5) par enlèvement de matière, le dispositif de support (1) présentant au moins un évidement destiné à recevoir l'au moins une ébauche (5), **caractérisé en ce que** l'évidement comporte, dans sa paroi, une rainure longitudinale (4) dans laquelle est prévu un élément de fixation (3) qui peut être déplacé vers le centre de l'évidement au moyen d'éléments de réglage (2) et qui permet une fixation réversible de l'ébauche (5).

2. Dispositif de support (1) selon la revendication 1, l'au moins un évidement étant choisi dans le groupe comprenant :
(a) un évidement circulaire ;
(b) un évidement en forme de demi-cercle ;
(c) deux évidements en forme de demi-cercle séparés par une traverse ;
(d) un évidement rectangulaire ;
(e) deux évidements rectangulaires ;
(f) trois ou quatre évidements rectangulaires ou plus.

3. Dispositif de support (1) selon la revendication 1 ou 2, le dispositif de support (1) étant cylindrique ou annulaire.

4. Dispositif de support (1) selon l'une des revendications 1 à 3, l'élément de fixation (3) étant une mâchoire de serrage, un cadre de serrage, une bague de blocage ou une bague de serrage.

5. Dispositif de support (1) selon l'une des revendications précédentes, les éléments de réglage (2) étant choisis dans le groupe comprenant une vis, une tige filetée, un excentrique et un levier à excentrique.

6. Dispositif de support (1) selon l'une des revendications précédentes, l'élément de fixation (3) étant, dans la position non fixée de l'ébauche dentaire (5), enfoncé dans la rainure longitudinale (4) de l'évidement ou de niveau avec la paroi de l'évidement.

7. Dispositif de support (1) selon l'une des revendications précédentes, le dispositif de support (1) présentant une hauteur de 5 à 15 mm, préférentiellement de 8 à 12 mm, et, de manière particulièrement préférentielle, de 10 mm.

8. Dispositif de support (1) selon l'une des revendications précédentes, le dispositif de support (1) présentant une épaisseur de 2,5 à 7,5 mm, préférentiellement de 4 à 6 mm et, de manière particulièrement préférentielle, de 5 mm.

9. Dispositif de support (1) selon l'une des revendications précédentes, la rainure (4) étant une rainure ronde ou une rainure angulaire, préférentiellement rectangulaire ou carrée.

10. Dispositif de support (1) selon la revendication 9, la rainure angulaire (4) présentant une largeur comprise entre 4 et 8 mm, et préférentiellement de 6 mm.

11. Dispositif de support (1) selon l'une des revendications précédentes, le dispositif présentant un évidement circulaire avec un diamètre de 85 mm à 95 mm.

12. Système d'ébauche, comportant un dispositif de support (1) selon l'une des revendications 1 à 11 et une ébauche dentaire cylindrique (5) ou deux ébauches dentaires demi-cylindriques (5) serrées dans le dispositif de support (1) par les éléments de réglage (2) et l'élément de fixation (3).

13. Système d'ébauche selon la revendication 12, le dispositif de support (1), en tant que bague positionnée centralement, comprenant l'ébauche dentaire cylindrique.

14. Procédé de positionnement, adapté en hauteur, d'une ébauche (5) ou de deux ébauches dans un dispositif de support selon les revendications 1 à 11, comprenant les étapes suivantes :
(a) fourniture d'un gabarit avec au moins un évidement correspondant à la forme de l'au moins une ébauche (5) et une profondeur correspondant à la hauteur de l'ébauche qui ressort du dispositif de support (1) vers le bas ;
(b) mise en contact d'un dispositif de support (1), contenant l'au moins une ébauche (5) introduite dans le dispositif de support (1), avec le gabarit, de sorte que non seulement le dispositif de support (1) repose sur le gabarit, mais aussi l'au moins une ébauche (5) repose sur le fond de l'évidement côté gabarit ;
(c) fixation de l'au moins une ébauche (5) par actionnement des éléments de réglage (2) ;
(d) retrait du dispositif de support (1) avec l'au moins une ébauche fixée (5) hors du gabarit.

15. Procédé de fabrication d'un corps dentaire moulé fritté, comportant les étapes suivantes :
(a) fourniture d'un système d'ébauche selon l'une des revendications 12 ou 13 ;
(b) serrage du système d'ébauche dans une machine de fraisage dentaire ;
(c) usinage des corps dentaires moulés par enlèvement de copeaux ;
(d) retrait du dispositif de support (1) hors de l'ébauche (5) usinée selon l'étape (c) ;
(e) frittage, dans un four de frittage, de l'ébauche (5) obtenue à l'étape (d), y compris les corps dentaires moulés contenus dedans et dégagés par fraisage ;
(f) séparation des corps dentaires moulés ayant subi un frittage final hors de l'ébauche frittée (5).
